# EUROPEAN PATENT SPECIFICATION

(11) **EP 4 247 620 B1**
(45) Date of publication and mention of the grant of the patent: **14.10.2026**
(21) Application number: 21894182.1
(22) Date of filing: 10.11.2021
(51) Int. Cl.: B29C 64/118, B29C 64/209, B29C 64/245, B33Y 10/00, B33Y 30/00, B33Y 70/00, B29C 64/106, B29C 64/314, B33Y 70/10, B29C 64/227, B33Y 40/10, B29C 64/336, B29C 64/295

(54) **AUTOMATED MANUFACTURE OF 3D OBJECTS FROM COMPOSITE MATERIAL**
AUTOMATISIERTE HERSTELLUNG VON 3D-OBJEKTEN AUS EINEM VERBUNDSTOFF
FABRICATION AUTOMATISÉE D'OBJETS 3D À PARTIR D'UN MATÉRIAU COMPOSITE

(30) Priority: 22.11.2020 US 202063116867 P
(43) Date of publication of application: 27.09.2023
(73) Proprietor: Massivit 3D Printing Technologies Ltd., 7129361 Lod (IL)
(72) Inventor: MILLER, Gershon, 7623420 Rehovot (IL); YAKUBOV, Igor, 4642756 Herzelia (IL); UZAN, Moshe, 9962332 bet Shemesh (IL); ZIMERMAN, Erez, 7406558 Nes Ziona (IL); GARTY, Shai, 7630825 Rehovot (IL); DVIR, Nir, 4650034 Herzelia (IL)
(74) Representative: Barker Brettell LLP
(86) International application number: PCT/IL2021/051334
(87) International publication number: WO 2022/107122

(56) References cited:
- WO-A1-2018/223043
- WO-A1-2019/034526
- AU-A1- 2015 234 243
- CA-A1- 3 034 682
- US-A1- 2017 105 311
- US-A1- 2017 217 013
- US-A1- 2020 047 404
- US-A1- 2020 086 553
- US-A1- 2020 329 814

## Description

### TECHNOLOGY FIELD

The method and apparatus relate to the manufacture of objects from composite materials and, in particular, to the automated manufacture of 3D objects.

### BACKGROUND

A composite material is a material that includes at least two individual components. Typically, the composite material includes a fibrous reinforcement that could be glass fiber, Kevlar, Carbon Fiber, or others and resin. The resin could be epoxy, polyester resin, or vinyl ester. In mixing and processing the two components, they bond mechanically and chemically and form a laminate part. The composite materials combined physical strength and properties exceed either of the individual material components properties. The resin may include pigments or dyes and provide the composite material with the desired color, reducing the painting process's need. The most frequently used carbon and glass fiber reinforced composite materials often referred to loosely as 'composites.'

The composite material is the primary manufacturing material (build material) of 3D objects and, in particular, of large 3D objects.

A labor-intensive wet layup process where layers of laminates are layed-up one over the other, combined with liquid resin, and hardened is still the primary large 3D objects manufacturing process. Typically, the large and bulky 3D composite objects are manufactured as two or more parts using a corresponding number of molds. The parts forming a 3D object are joined, a vacuum is then applied, and resin that bonds the matting injected. Once the resin has hardened, the two or more parts are pieced together to form a 3D object. An infusion technique simplifies the resin introduction and hardening process, but the layed-up is still a labor-intensive process.

Almost all 3D objects and, in particular, large 3D objects are subject to further manufacturing steps. The outer surfaces of the 3D objects could be polished, painted, and coated with varnish. All of the processes are still manual, time-consuming, and costly.

Composite materials are popular for several reasons. The materials are lightweight and have high strength. The composites have superior resistance to almost all environments. Any composite material manufacturer can produce nearly every composite object if the manufacturer has or can produce a suitable mold or mandrel. The manufacturing steps of 3D objects made from composite materials described above slow down the manufacturing process, increase the manufactured 3D object cost, and waste composite material.

Despite the low weight, environmental stability, and strength advantages of composites, the high cost of labor-intensive and time-consuming manufacturing methods impedes the growth and use of composite materials.
US 2020/0329814 A1 discloses systems and methods for supporting an object to be printed in an additive manufacturing process, in which support structures are prefabricated in the build area of a 3D printing device prior to printing the 3D object and, when the object has been printed, the support is removed and can be reused to print another object by repositioning the support structure in the building area of the additive manufacturing device. This document discloses the preamble of claims 1 and 10. CA 3034682 A1 discloses a method of printing a 3D part with an additive manufacturing system, including printing a first portion of the part and pre-heating the first portion of the part along an upcoming tool path to a temperature at or above a material-specific bonding temperature and below a degradation temperature of the material. Material is extruded onto the first portion along the pre-heated tool path while the temperature along the part surface remains at or above a material- specific bonding temperature and below the degradation temperature of the material thereby forming a newly extruded road. The method includes cooling the newly extruded road along the pre-heated tool path to remove heat imparted by the preheating step such that a thermally stable temperature is reached, wherein the preheating, extruding and cooling is performed in less than ten seconds.
WO 2015/139094 A1 discloses a method for fabricating an object with a computer-controlled apparatus, and the apparatus therefor. The apparatus comprises a reservoir containing liquid, curable material, means to selectively solidify the curable material and a platform for supporting cured material which is movable relative to the reservoir and rotatable about at least one axis. The method involves the steps of selectively solidifying portions of the curable material, whereby at least one portion abuts the platform, moving the platform, thereby repositioning the solidified portions supported thereon, and rotating the platform, thereby reorientating the solidified portions supported thereon.

### DEFINITIONS

Composite material sheet laminating is the process of taking one composite material sheet and laminating it to another composite material sheet to provide additional strength to the material.

Aramid fiber is a blend of the words "aromatic" and "polyamide." Aramid fiber is a general term for a fiber in which at least 85% is of amide linkages (-CO-NH-) attached directly to two aromatic rings.

Complex shaped 3D object means a 3D physical object including curved surfaces that could be convex or concave, flat surfaces, and surfaces that could overhang outside the main body of the object or, in case a hollow object, protrude into a hollow void or cavity inside the 3D object. The surfaces could be inclined, oriented at different angles, and have different thicknesses or sizes.

Pre-preg is a "pre-impregnated" composite fiber or strand where a thermoset polymer matrix material, such as epoxy or a thermoplastic resin, is already present. The thermoset matrix is partially cured to allow secure handling; this B-Stage material requires certain storage conditions to prevent complete curing.

End face preparation is a process where the end of manufactured composite object segments is prepared for connection with the next composite object segment. End face preparation could include end diameter reduction or expansion, flanging, and chamfering.

Filament - is the smallest unit of fibrous material. Filaments are the basic units formed during drawing and spinning and gathered into strands of fiber for composites.

Filament Winding - is a process for fabricating a composite structure in which continuous reinforcements (filament, wire, yarn, tape, or other). Previously impregnated with a matrix material or impregnated during the winding, the filament is placed over a rotating and removable form or mandrel in a prescribed way to meet certain stress conditions.

An end-effector is usually a tool attached to the end of a robotic arm and is the tool that performs the desired function. The function could be material deposition, spray paint, and polish the ready 3D object.

The term "robotic arm" used in the current disclosure includes a robotic arm, a gantry, a rail/guide with a carriage, and other equivalents capable of picking up and carrying a load.

### SUMMARY

According to the invention there is provided a method of, and apparatus for, manufacture of 3D objects from composite materials, as defined by the appended claims.

Described is a method of manufacture of 3D objects from composite materials. In one example, the method includes the use of an extrusion nozzle configured to extrude the composite material including, a multistrand filament with a thixotropic matrix material surrounding the multistrand filament. Extruding a 3D object surface segment spanning in the air over at least a portion of a discontinuous work surface and operating concurrently a source of curing energy to pin and enhance the strength of a 3D object surface segment spanning in air. The 3D object extruded surface segment spanning in the air is sufficiently rigid and maintains its shape without the use of a mandrel.

A discontinuous work surface formed by individually adjustable support columns terminated by a receiving surface configured to accept the desired orientation in space supports the manufactured 3D object. One or more robotic arms move and operate suitable pick-up end-effector tools to perform a plurality of operations in the manufacture of the 3D object.

In one example, the 3D object is manufactured in layers, and each layer of the 3D object is extruded from a different material. In some examples, one or more ribs supporting the 3D object surface segment spanning in the air could be extruded concurrently with the extrusion of a surface segment.

In some examples, a metallic or polymeric grid distributed over the adjustable support platform serves as a substrate for the 3D object composite material deposition.

The method of manufacture of 3D objects from composite materials, includes the manufacture of an enhanced multistrand filament with a thixotropic matrix material surrounding the multistrand filament. The multistrand filament could be in a shape of a flat strip. Different multiple coatings could be deposited on the sides of the flat strip.

Disclosed is also an apparatus for the manufacture of 3D objects from composite materials. The apparatus includes an adjustable support platform formed by a plurality of individually adjustable support columns, at least one material extrusion nozzle configured to extrude a composite material of a manufactured 3D object and at least one robotic arm configured to operate a plurality of end-effector tools. The end-effector tools could be a material extrusion nozzle, a grid spreading arrangement, a painting brush, a polishing tool and others, as it could be required by the manufacturing process. At least one robotic arm maintains at least an extrusion nozzle perpendicular to surface of the extruded 3D object's surface segment, wherein the individually adjustable support columns are terminated by an object receiving surface configured to accept the desired orientation in space.

### LIST OF FIGURES AND THEIR SHORT DESCRIPTION

To understand the apparatus and method and to see how could be carried out in practice, examples will now be described, by way of non-limiting example only, with reference to the accompanying drawings, in which identical referral numbers mean identical or similar parts:
FIG. 1 is a side view of an example of the present apparatus for manufacturing a 3D object from composite material;
FIG. 2 is a cross-section C-C of FIG. 1;
FIG. 3 is an example illustrating a heat curing arrangement of the apparatus of FIG. 1;
FIG. 4A is an example of on-site preparation of a composite multistrand filament;
FIG. 4B is another example of on-site preparation of a composite flat multistrand filament;
FIG. 4C is a further example of on-site preparation of a composite flat multistrand filament;
FIG. 4D is an additional example of on-site preparation of a composite flat multistrand filament;
FIG. 4E is an example of on-site preparation of a composite flat multistrand flat strip coated with layers of different thicknesses on the same side of the strip;
FIG. 5 is a block schema illustrating control and operation of additional units of the present apparatus;
FIG. 6 is an example of a method of manufacture a 3D object, including a convex and concave surface segment from composite material;
FIG. 7A is another example of a method of manufacture of a 3D object, including a convex and concave surface segment from composite material;
FIG. 7B is an additional example of a method of manufacture of a 3D object, including a convex and concave surface segment from composite material;
FIG. 8A illustrates a method of manufacture of a 3D object using a support grid;
FIG. 8B is an additional view of the method of manufacture of a 3D object using a support grid;
FIG. 9 is an illustration of the 3D object of FIG. 6 rotated for printing the second side of the 3D object; and
FIG. 10 is an example illustrating filament winding over a partially fabricated 3D object.

### DESCRIPTION

Despite the weight, environmental stability, and strength advantages of composites, the high cost of tooling and labor-intensive and time-consuming manufacturing methods impede the growth and use of composite materials. The availability of a low-cost manufacturing process that would significantly reduce the labor-intensive operation, alleviate the need for a mandrel or mold, and maintain the manufactured object quality would rapidly advance the industry.

The present document discloses an automated method and apparatus for the manufacture of almost any three-dimensional objects from composite material. The automated production method applies to sculptures, exhibition exponents, wind rotor blades manufacture, wing, and boat manufacture. The suggested method would reduce the manufacturing cost and provide a better degree of 3D object profile precision.

The document also discloses a multistrand filament preparation with a thixotropic matrix material surrounding the multistrand core. A coating of the extruded multistrand core by a thixotropic material supports almost instant hardening of the combined multistrand material and simplifies the curing process.

The document further discloses a method and apparatus for large 3D objects manufacture applicable to the manufacture of the 3D objects on the object installation site.

### THE APPARATUS

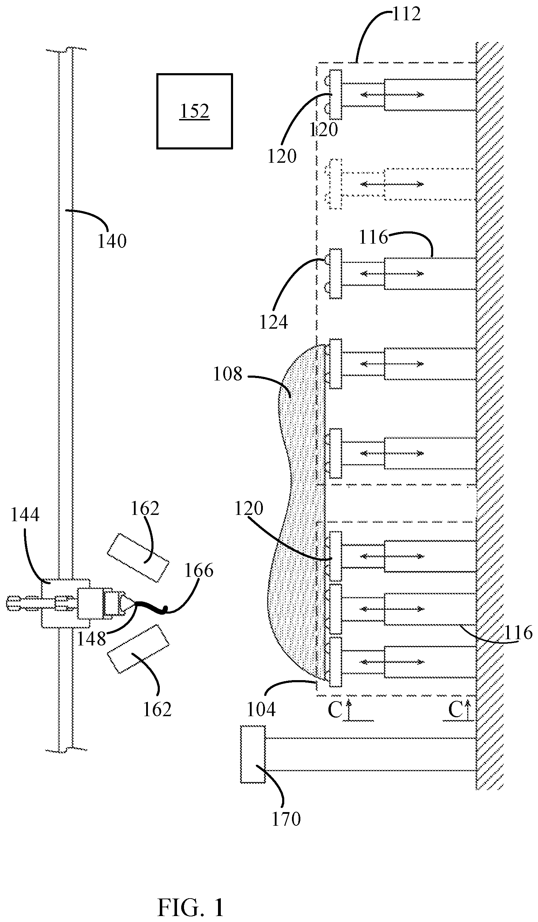

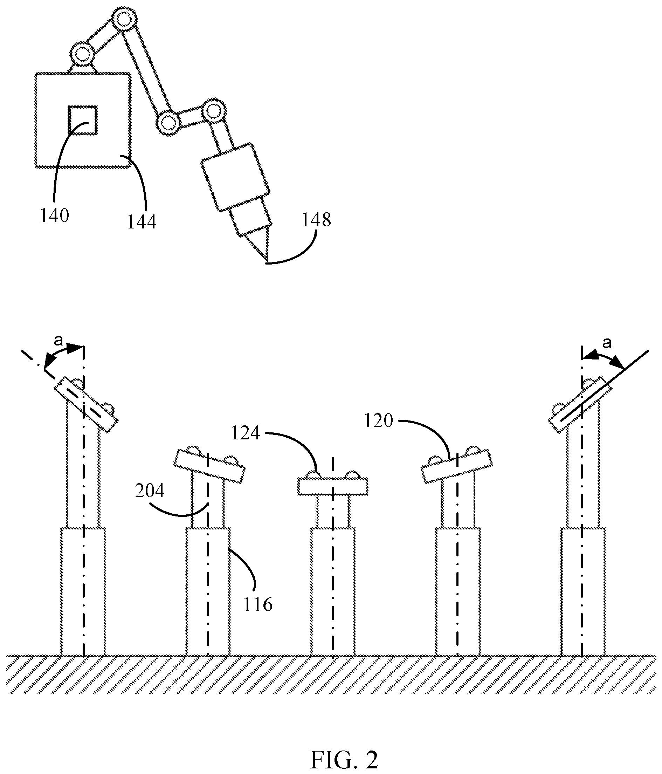

FIG. 1 is a side view of an example of an apparatus for manufacturing a 3D object from composite material. Apparatus 100 includes an adjustable support platform 104 configured to support a manufactured 3D object, for example, a 3D object 108 placed on the support platform. 3D objects are complex objects and include flat and curved surface segments. The curved surface segments could consist of convex or concave surfaces. When long 3D objects, for example, wind rotor blades, or the body of a canoe, have to be manufactured, their dimensions could exceed the reasonable dimensions of an adjustable support platform 104. A plurality of individually adjustable support columns 116 form the adjustable support platform 104. Section 112 of apparatus 100 also includes several separate and adjustable 3D object support columns 116 arranged to support the hanging over the adjustable support platform 104 segments of an extended or protracted 3D object 108. Adjustable support columns 116 are configured to move along Z-axis and include a receiving surface 120 accepting the hanging over adjustable support platform 104 segments of long object 108. Receiving surface 120 of adjustable support columns 116 could be populated by rotating spherical bodies 124, facilitating object 108 repositioning. Receiving surface 120 could be rotated in a range of almost 340 degrees (FIG. 2) in any direction concerning symmetry axis 204 (Z-axis) such that any receiving surface 120 of adjustable support columns 116 could support any curved 3D object in every place on the adjustable support platform. In some examples, the adjustable support columns 116 with their receiving surfaces 120 could be repositioned to meet certain 3D object manufacturing requirements.

The frequency of the location of adjustable support columns 116 could be different along with apparatus 100. The distance between receiving surfaces 120 with inserted rotating spherical bodies 124 of adjustable support columns 116 is selected to support a minimal sag of the surfaces of the 3D object 108 (FIG. 1). In some examples, rotating cylinders replace rotating spherical bodies 124. Motors could be connected to the rotating cylinders and operate the cylinders to assist in repositioning, such as the manufactured 3D object rotation.

Apparatus 100 could include a guide 140. At least one robotic arm 144 could be attached or travel along with guide 140. Typically, the guide supports the robotic arms movement along with the longest dimension of the 3D object. One or more robotic arms 144 could be configured to perform different operations. For example, carry a composite material extrusion nozzle 148, a paint spraying head, a 3D object polishing device, and others required. Robotic arm 144 moves the composite material extrusion nozzle 148 and other end-effectors (tools) connected to robotic arm 144 in three directions or axes (X, Y, and Z). Robotic arm 144 supports rotation of the end-effectors around each of the three axes.

In some examples, apparatus 100 could include multiple robotic arms with at least one robotic arm operating from the bottom side of adjustable support platforms 104 and 112. Repositioning of adjustable support columns 116 in specific places could facilitate the operation of a robotic arm accessing adjustable support platforms 104 and 112 from the bottom.

In the course of material extrusion, adjustable support platform 104 supports the manufactured 3D object. The width of the adjustable support platform 104 sets at least one dimension of the 3D object. In the present case, the width of the adjustable support platform 104 could be one to four-meter wide. The number of adjustable support columns could be used to regulate the length of the manufactured 3D object.

One or more curing radiation sources 162 could accelerate the curing of extruded filament 166. Some examples of apparatus 100 (FIG. 1) could include multiple means for curing the extruded material. An example of curing sources might be multiple ultraviolet radiation sources 162 placed in proximity to the extrusion nozzle. In a further example, the curing radiation sources could be arranged to direct the radiation on the just extruded elements of the 3D object.

A laser beam or other optical alignment instruments 170 based on the use of a laser beam could be employed for alignment and calibration of the receiving surfaces 120 of adjustable support columns 116. The feature facilitates general alignment and calibration for off-site (in the field) 3D object manufacturing installations.

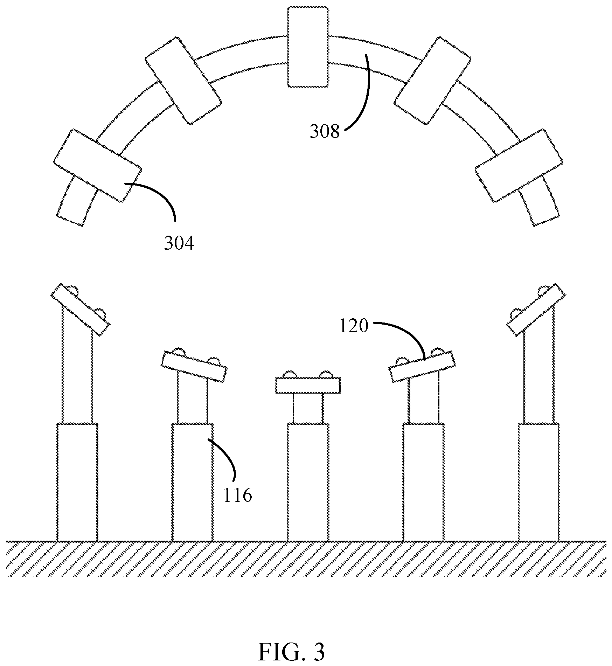

Heat could cure some of the extruded materials. Apparatus 100 could include several IR sources 304 (FIG. 3) or even simple heaters arranged to heat the just extruded elements of the 3D object. The IR sources 304 could be arranged on a bridge-type holder 308 moved by a robotic arm along the manufactured 3D object. Alternatively, the IR sources 304 could be placed on a gantry carrying the IR sources along with the manufactured 3D object.

### EXTRUSION

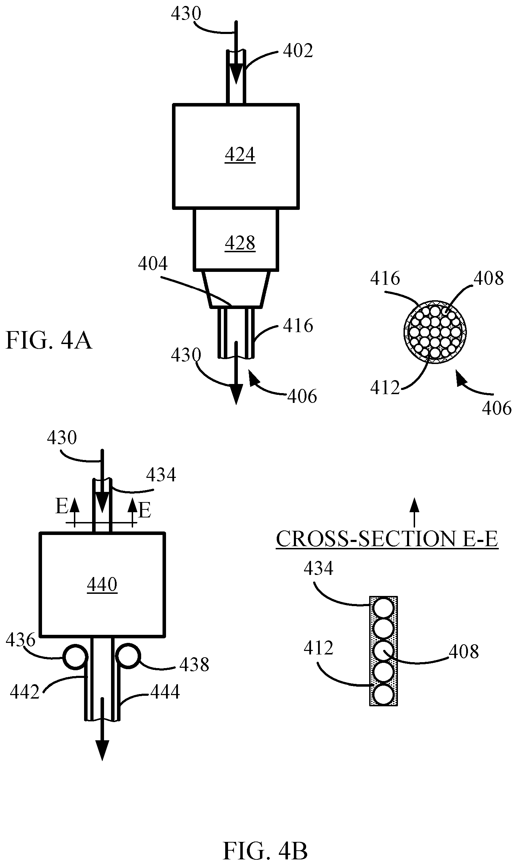

FIG. 4A is an example of an extrusion nozzle 404 configured to extrude an enforced multistrand filament prepared in a mode similar to the one disclosed in the U.S. Patent Application Publication No. 2014/0328964, Patent Cooperation Treaty Publication WO2019/245363, and European Patent No. 3 231 592. In one example, a reinforced multistrand filament 406 is prepared on the manufacturing site along with the manufacture of the 3D object. Alternatively, an earlier prepared and purchased from a third party multistrand filament (prepreg) could be of use. In one example, the reinforced filament 406 comprises a multistrand core 408, a matrix material 412 surrounding the multistrand core, and an additional coating 416 supporting a rapid solidification of the reinforced filament 406. Additional coating 416 also makes the surface of the multistand reinforced filament 406 smooth. Core 408 of the reinforced filament could be one of a group of materials consisting of glass fiber, carbon fiber, aramid fiber, or Kevlar strands. The filament matrix 412 could be a polymer such as one of a group of materials consisting of a du-component epoxy, fast curing epoxy: polyester resin, or vinyl ester. The epoxy components are combined in a mixing chamber 424 before extrusion and extruded with the multistrand core or filament.

In a further example, the reinforced filament 406, which could be a prepreg material, comprises an additional coating layer 416 surrounding the matrix material. For example, the additional coating material could be a cationic curable epoxy or thixotropic material supporting the rapid solidification of reinforced filament 406.

In the current disclosure, the reinforced multistrand filament 406 further passes through another coating system 428. The coating system 428 is coating the original multistrand filament 402 with a layer of thixotropic material 416. The thixotropic material supports almost instant hardening of the reinforced and coated filament 406. The thixotropic material could be such as Dimengel, a proprietary photo polymeric material available from the present application assignee. Arrows 430 show the direction of the multistrand filament advance.

In a further example, the multistrand filament is prepared as a flat strip 434 (FIG. 4B). Strip 434 could be prepared earlier as a prepreg and fed through two rollers 436 and 438. The flat strip's advantage is that it could be easily coated on each side 442-444 of the strip by different coating/material, and each of the coated layers could be of different thickness forming flat strip 434-1. For example, side 442 could be coated by a fast curing or du-component epoxy, and side 444 could be coated by a thixotropic material. Strip 434-1 could be prepared on the 3D object manufacturing site by providing a multistrand core and a coating system 440.

The fast curing epoxy could be a cationic curable epoxy supporting rapid solidification of the reinforced filaments in the shape of a cylindrical or flat strip. The thixotropic material could be a material commercially available from the assignee of the present application.

As explained earlier, the core of the reinforced filament 434 could be one of a group of materials consisting of glass fiber, carbon fiber, aramid fiber, or Kevlar strands.

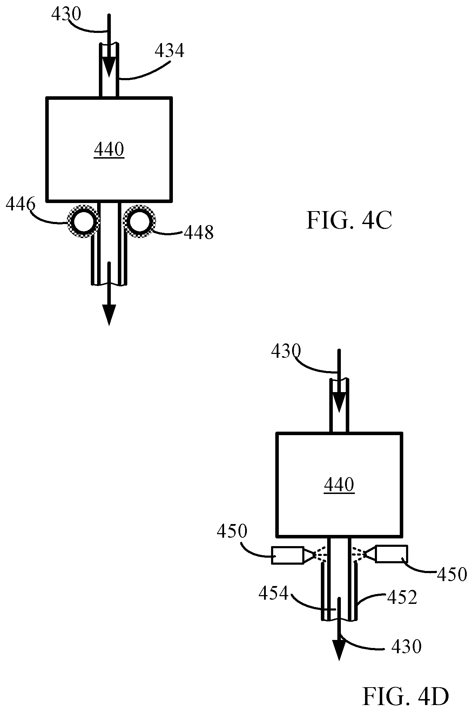

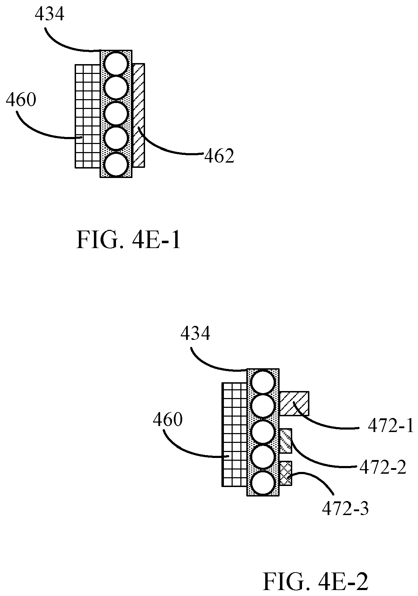

FIG. 4C illustrates a brush coating system, where each brush 446-448 could coat opposite sides of flat strip 434 with identical or different material. FIG. 4D illustrates a spray coating system, where a material spray nozzle 450 sprays a different material 452 or 454 on the opposite sides of the flat strip. FIG. 4E-1 are examples of flat strips coated by different methods forming layers 460 and 462 of different thicknesses. FIG. 4E-2 illustrates an example where one or more inkjet nozzles deposit on the same side of a flat strip 434 different materials 472-1, 472-2, and 472-3. The deposited materials could be of the same or different thicknesses.

Extrusion nozzle 404 (FIG. 4A) extrudes the reinforced and coated by the thixotropic material multistrand filaments 406, 434-1, and others to form the flat and curved segments of 3D object 108 (FIG. 1). U.S. Patent No. 10,639,846 to the same assignee and inventor discloses a multi-nozzle extrusion apparatus where each of the extrusion nozzles operates independently from other extrusion nozzles. The apparatus supports the simultaneous printing of different segments of 3D object 108 or similar. Other sizes and shapes of the nozzle cross-section, for example, hexagonal, square, oval, and rectangular, could be used according to particular 3D object requirements. The diameter of the extrusion nozzle 404 (FIG. 4A) would typically be 2.0 - 2.5 mm. The rectangular or oval nozzle could be 1.0-2.5 mm wide and 5.0-10.0 mm long, although other larger or smaller sizes are possible. The nozzle could be interchangeable, allowing apparatus 100 (FIG. 1) to manufacture parts with different structure surfaces.

The feed rate at which the multistrand filament 406 and other reinforced filaments are extruded or coated could also regulate the thickness of the coatings. In one example, the use of multiple extrusion heads is envisioned. Multiple feeders could operate to extrude multiple strands to feed multiple extrusion heads. Apparatus 100 could alternate between multiple feeders and apply different multistrand filaments to different segments of a 3D object.

### ADDITIONAL UNITS OF THE APPARATUS

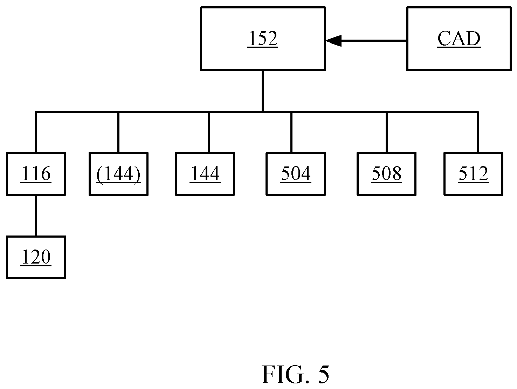

FIG. 5 is a block schema of additional units of apparatus 100, their control, and operation. Apparatus 100 includes a control computer 152 that governs the operation of apparatus 100 (FIG. 1). Control computer 152 receives from a CAD system the contour (profile) and length of a 3D object to be manufactured, for example, 3D object 108. Computer 152 adjusts the angle and height of receiving surfaces 120 of adjustable support columns 116 (FIG. 1) to match the outline curvature (profile) and length of a 3D object 108. Control computer 152 controls one or more robotic arms 144 movements, material trough nozzle 148 extrusion rate, curing energy level, and other 3D object manufacturing parameters.

Control computer 152 controls robotic arms of a 3D object polishing device 504, a paint spraying device 508, varnish depositing device 512, and others as required. Robotic arm 144 or similar moves the extrusion nozzle 148 and other end-effectors (tools) connected to the robotic arm in three directions or axes (X, Y, and Z) and supports rotation of the end-effectors.

Control computer 152 could be configured to control a plurality of robotic arms 144 simultaneously; for example, several robotic arms configured to control the movement and extrusion of different materials through different nozzles; simultaneous painting of different surfaces segments of the 3D object and others.

### ROBOTIC ARM

A robotic arm is a chain of links that are moved by joints actuated by motors. An end-effector is usually attached to the end of the chain. End-effector is the tool that performs the desired function. The robotic arm moves the end-effector from place to place. The current description discloses the use of several end-effectors tools suited to deposit the extruded material, spray paint, and polish the ready 3D object. The robotic arm is configured to operate a plurality of exchangeable end-effector tools. Several robotic arms could simultaneously operate several end-effector tools.

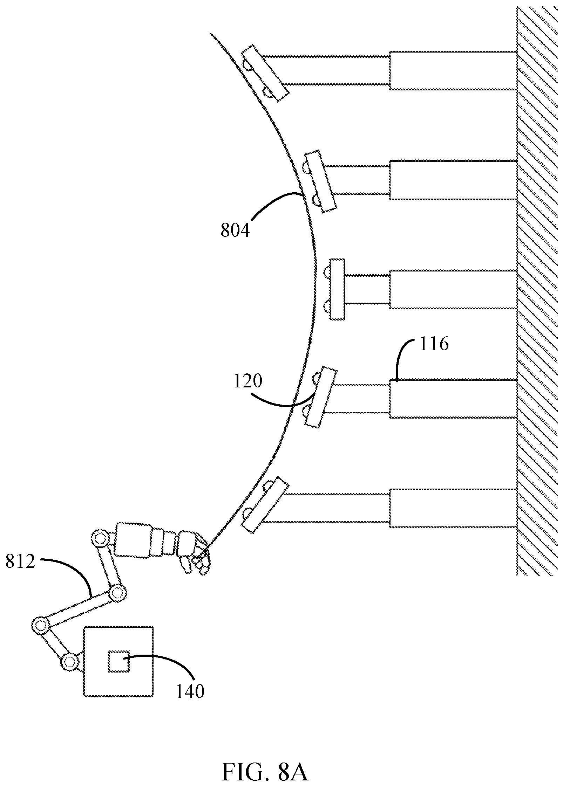

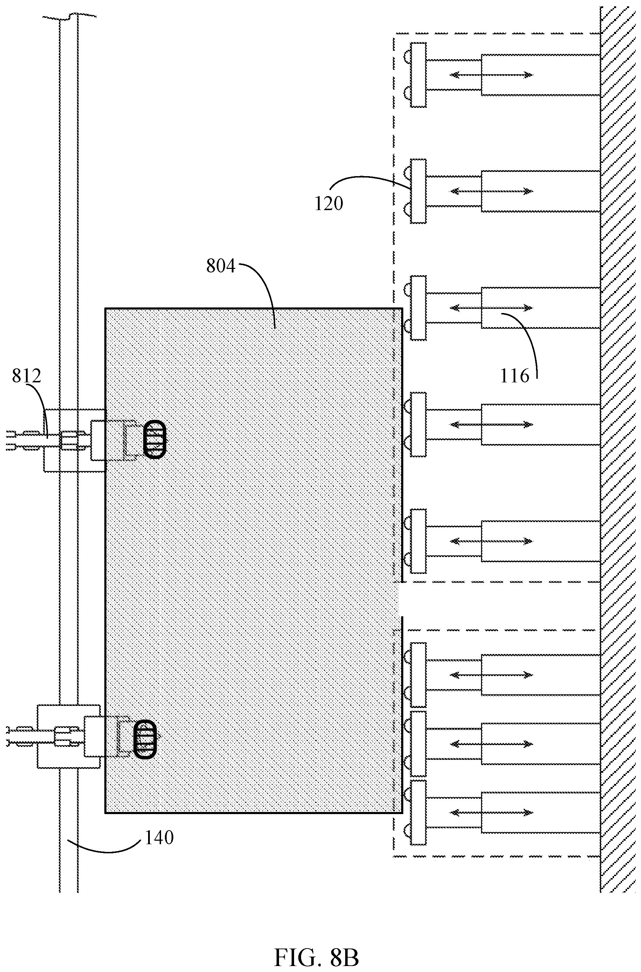

U.S. Patent Nos. 8,974,213, 9,162,391, and 9,527,243 to the same assignee disclose a method of strengthening a 3D object by inserting a metallic or polymeric net or grid between the extruded layers. In another example, a robotic arm 144 or similar with a suitable pick-up end-effector tool could be set to pick-up and spread a metal or polymeric grid (net) 804 (FIG. 8) over receiving surfaces 120 of adjustable supports 116. Such a grid with properly selected mesh provides a convenient substrate for the deposing of extruded material.

Robotic arms could have built-in pressure sensors, vision sensors, and others that provide the computer 152 with the desired feedback and coordinate the robotic arm movements.

In the present disclosure, one or more robotic arms are mounted on a rail 140, supporting the rail's robotic arms displacement. At least one collision detection sensor is operative to provide the computer governing a robotic arm displacement about a potential collision.

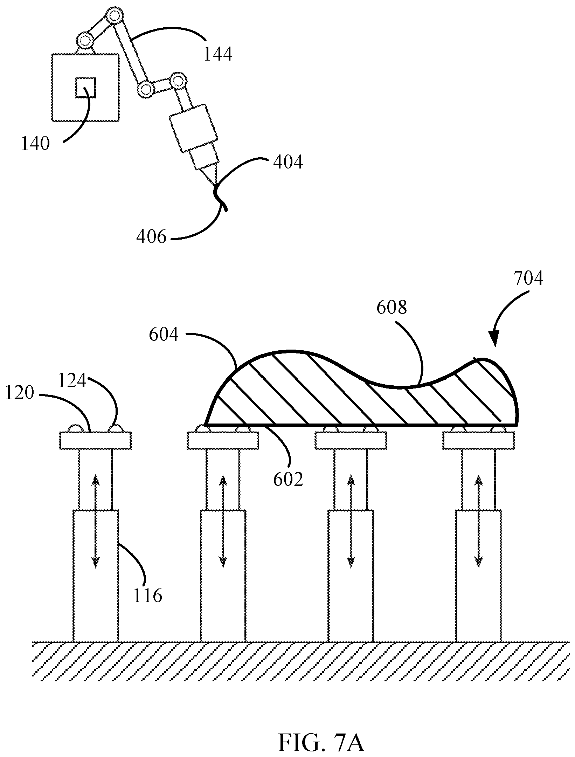

Robotic arm 144 is configured to reach every point on the adjustable support platform's surface, and adjustable support section 112, and maintain nozzle 148, always perpendicular to the extruded 3D object' surface segment. Nozzle 148 mounted on robotic arm 144 could rotate around each of X, Y, and Z axes at least 180 degrees. The use of robotic arm holding nozzle 148 supports extrusion of an entire ark/rib (FIG. 7A) at a single set-up.

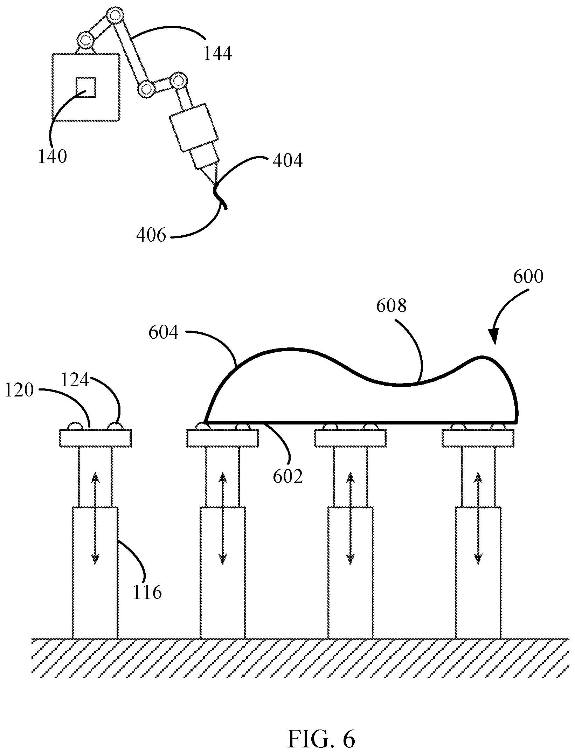

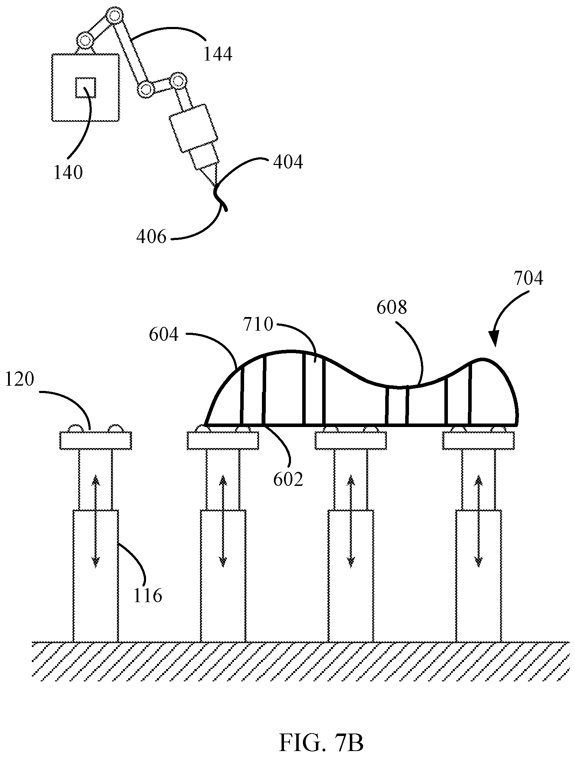

In the course of the composite material 3D object manufacture, robotic arm 144 moves the extrusion nozzle 148 across and along the longitudinal guides 140 and deposits the reinforced filament (FIG. 6 and 7) at different angles with respect to the adjustable platform 104 and 112 (FIG. 6) and adjustable supporting surfaces of the 3D object. The reinforced filaments are applied to the 3D object in a spiral pattern. The spiral angle can be adjusted to deposit as many spirals as it takes to make a continuous layer.

At least one layer of the reinforced filaments using the fast curing epoxy matrix could be applied to the 3D object in a spiral pattern to form a continuous surface. A multistrand filament with a matrix of a du-component epoxy could form the subsequent layers of the 3D object. Such 3D object structure provides the 3D object with additional strength. Other changes and replacements of materials from layer to layer to get optimal results strength are within the disclosure scope.

### EXAMPLES

FIG. 6 is an example of a method of extruding a 3D object 600 made from composite material. 3D object 600, including a convex 604 and a concave 608 surface segments. All surface segments of 3D object 600 terminate on the same level and form a plane or flat surface 602 of a 3D object 600 on the adjustable support platform 104/112. A CAD system provides control computer 152 the information concerning 3D object 600. Control computer 152 operates to level all receiving surfaces 120 of support columns 116 and form a flat surface of an adjustable support platform.

Apparatus 100 (FIG. 1) extrudes the composite material to form arks of a convex 604 and concave 608 surface segments. The arks of a convex 604 and concave 608 surface segments are connected to the adjustable support platform 104/112. In another example, a strip of composite material forming flat surface 602 could create a strong closed contour. Extruded material, for example, a thixotropic material hardens immediately after leaving nozzle 404, and strips of material forming flat surface 602, convex 604 and concave 608 surfaces become rigid enough not to deform under their weight. The 3D object surface segments 604 and 608 formed by the extruded composite material spanning in the air are rigid enough and remain suspended in the air. No mandrels were used in the manufacture of the 3D object surface segments 604 and 608.

In another example, apparatus 100 extrudes a strip of material to form the contour of flat surface 602. Apparatus 100 (FIG. 1) continues to extrude the arks of a convex 604 and concave 608 surface segments connected to the contour of flat surface 602.

Strips of material forming a segment of flat surface 602 are a type of intermediate supports strengthening the contour of 3D object 600 and may not be printed at every pass.

A robotic arm 144 moves extrusion nozzle 404 in three directions or axes (X, Y, and Z) and supports rotation of extrusion nozzle 404 around each of the three axes. In the course of the movement, nozzle 404 extrudes reinforced and coated filament 406 to form at least a segment of the 3D object 600. Nozzle 148 is configured to perform movement similar to nozzle 404.

When one extrusion nozzle operates, the segments of 3D object 600 are extruded sequentially. U.S. Patent No. 10,639,846 to the same assignee and inventor discloses a multi-nozzle extrusion apparatus where each of the extrusion nozzles operates independently from other extrusion nozzles. Such apparatus supports the simultaneous printing of different segments of 3D object 600. According to the present manufacturing method, the manufacture of a 3D object 600 does not require mandrels or molds.

Apparatus 100 could support the manufacture of a 3D object 600 as an assembly of layers. The layers could be layers of different materials. For example, one of the layers could be manufactured using a fast curing epoxy and another layer using a du-component epoxy. Apparatus 100 with a single extrusion head would extrude the different layers sequentially. Apparatus with multiple extrusion heads could extrude layers from different materials simultaneously.

U.S. Patent No. 10,328,635 to the same assignee discloses a method and apparatus for the manufacturing of 3D objects. For multiple identical 3D objects, apparatus 600 could be configured to use a proper material and manufacture a mold. The mold could be used for the manufacture (casting) of identical 3D objects. The disclosed method saves identical 3D objects manufacturing time and reduces their manufacturing cost.

FIG. 7A is another example of a method of manufacture of a 3D object, including a convex and concave surface segment from composite material. The strength of long 3D object surface segments with a height exceeding 50 mm and spanning across discontinued or discrete adjustable platform surface 104/112 could be enhanced by adding internal support walls or ribs 704. Internal support ribs 704 could be printed simultaneously with convex 604 and concave 608 segments of 3D object 600. Internal support walls or ribs (FIG. 7) follow exactly the contour of the 3D object. In some examples, ribs or walls 704 could be manufactured to present a complete 3D object cross-section, i. e., spread around 360 degrees. Ribs spreading around 360 degrees could support 3D object repositioning, for example, rotation of the 3D object.

Internal support walls (FIG. 7B) could be a set of columns 710 or other shapes. Openings supporting the introduction of cables or tubes could be produced in the support walls or entered between columns 710. The locations and frequency of internal support walls and columns positioning could be selected to maintain the manufactured 3D object's integrity.

In another example, when the 3D object has no flat surfaces, apparatus 100 could initiate 3D object manufacture by employing a robotic arm 812 or another robotic arm to spread a metal or polymeric grid (net) 804 over relevant receiving surfaces 120 of adjustable support colomns 116. Control computer 152 (FIG. 1) receives the 3D object data from a CAD system and operates to place all receiving surfaces 120 of support members 116 to match the manufactured 3D object's curvature and length. The use of net or grid 804 supports the extrusion of any 3D object shapes. FIG. 8B illustrates the spread of a grid substrate 804 by robotic arms 812.

A robotic arm moves extrusion nozzle 404 in three directions or axes (X, Y, and Z) and supports the rotation of extrusion nozzle 404 around each of the three axes. In the course of the movement, nozzle 404 extrudes reinforced and coated filament 406 to form at least a part of the 3D object. The manufactured 3D object could include convex or concave surface segments.

In both examples, shown in FIGS. 6 and 7, the manufactured 3D objects could include some internal structures enhancing the 3D object's strength and functional elements. Composite materials with controlled porosity structure, like honeycomb, are known to enhance the strength of a 3D object. For example, the extruded controlled porosity structures could have a variable pitch and height of the cell wall. For example, in the case of a wind rotor blade, the spar sections could have a honeycomb structure changing the pitch along the blade's length.

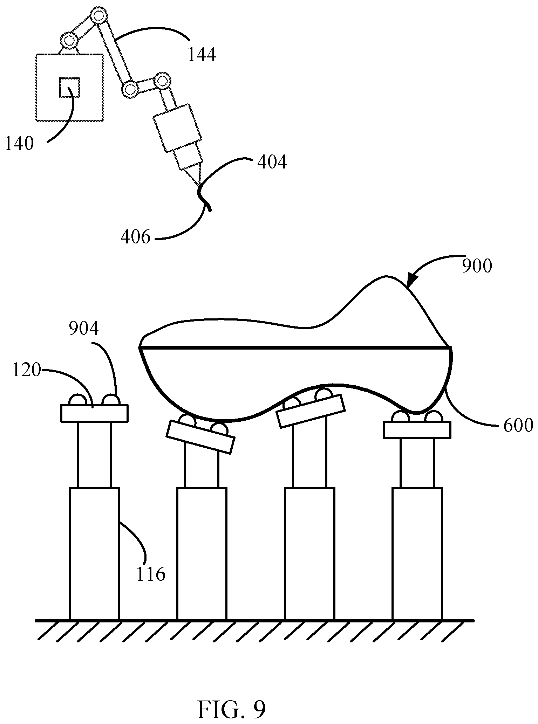

Upon completion of the manufacture of the 3D object made of composite material, the 3D object 600 (FIG. 9) could be repositioned, for example, turned 180 degrees about one of the sides of the 3D object. 3D object rotation could be accomplished by proper adjustment of support columns 116 and the use of robotic arms. Additional convex or concave segment 900 directed opposite the arks 604 and 608 of the object 600 could be manufactured.

Upon completion of the 3D object's manufacture, the almost finished 3D object assembly has to be polished. One or more robotic arms holding pads with sandpaper could be activated to polish the outer surfaces of a wind rotor blade 1000. In a similar manner, a robotic arm could be used to manipulate a paint spraying device and paint and cover by varnish the surfaces of the wind rotor blade.

Apparatus 100 (FIG. 1) is suitable for manufacture three-dimensional objects with a cross-section of a conventional airfoil profile. Airfoils are profiles of airplane wings, wind turbine blades, and other 3D objects include a convex surface and a concave surface. Airfoils and canoes are relatively long objects. The current manufacturing method suggests the manufacture of such long 3D objects by cutting the objects into sections, manufacture each section separately, and connecting them into one long 3D object. Following proper end face preparation, the strength of the connection areas could be enhanced by using a grid, filament winding, and extruding a stronger material.

U.S. Patent Nos. 8,974,213, 9,162,391, and 9.527,243 to the same assignee disclose a method of strengthening a 3D object by inserting a metallic or polymeric net or grid between the extruded layers. The 3D objects printed by the methods described in the patents spread the grid over flat surfaces or surfaces with a homogenous curvature. Object 600 has segments 604 with positive curvature 604 and negative curvature 608. In one example, the grid could be segmented according to the manufactured 3D object segments. In another example, a different filament winding could be applied to different 3D object segments.

In one example, a 3D object could be manufactured as a single solid object. In another example, a large segment, e. g., a half (FIG. 6), of the 3D object is manufactured. To manufacture other surface segment/s, 3D object 600 could be repositioned, for example, rotated, to facilitate other surface segments 900 (FIG. 9) manufacture. Change in the angle of receiving surfaces 120 (FIG. 6) supports rotation of 3D object 600 rotated for printing the second side of the 3D object. Change in position of receiving surface 120, operation of rollers, use of robotic hand, and similar could assist in the process of 3D object reposition.

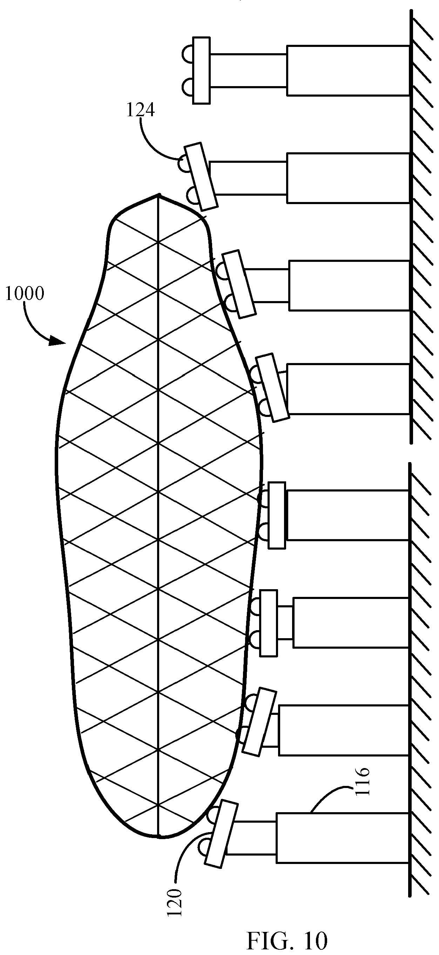

FIG. 10 is an example illustrating filament winding over a partially fabricated 3D object. Filament winding strengthens the partially fabricated 3D object 1000 and presents a convinient substrate over which additional layers of 3D object material could be deposited. 3D object could be reposioned for filament winding by different means including operation of rollers, use of robotic arm, and similar processes.

Upon completion of the 3D object's manufacture, the almost finished 3D object assembly has to be polished. One or more robotic arms holding pads with sandpaper could be activated to polish the outer surfaces of a 3D object, for example, a wind rotor blade. In a similar manner, a robotic arm could be used to manipulate a paint spraying device and paint and cover by varnish the surfaces of the wind rotor blade.

## Claims

1. A method of manufacture of 3D objects from composite materials, comprising:
providing a composite material;
providing an extrusion member configured to extrude the composite material;
providing a work surface comprising a plurality of discrete support columns (116) terminated by a receiving surface (120) and extruding at least one 3D object (108) surface segment spanning in the air across at least a portion of a discrete work surface, **characterized in that**:
the composite material includes a multistrand filament (166) with a thixotropic matrix material surrounding the multistrand filament (166); and
the receiving surface terminating the discrete support columns (116) is configured to accept the orientation in space matching the orientation of the 3D object (108) surface segment spanning in the air.

2. The method of claim 1, wherein operating a source (162) of curing energy to accelerate complete curing of the spanning in the air 3D object surface segment.

3. The method of claim 1, wherein the 3D object (108) surface segment's spanning in the air is rigid enough and remains suspended in the air without the use of a mandrel.

4. The method of claim 1, wherein the method includes the manufacture of a mold for casting 3D objects.

5. The method of claim 1, wherein the thixotropic material supports instant hardening of the multistrand filament (166).

6. The method of claim 1, wherein the multistrand filament (166) is a reinforced filament (406) comprising a multistrand core (408), a matrix material (412) surrounding the multistrand core (408) and an additional coating (416) supporting a rapid solidification of the reinforced filament (406).

7. The method of claim 6, wherein the multistrand core (408) is composed of a materal selected from glass fiber, carbon fiber, aramid fiber and Kevlar strands.

8. The method of claim 6 or claim 7, wherein the matrix material (412) is composed of a material selected from a two-component epoxy, a fast curing epoxy, a polyester resin and a vinyl ester.

9. The method of claim 1, comprising:
extruding the multistrand filament (166) in a shape of a flat strip; and
applying multiple coatings of different material to the sides of the flat strip.

10. An apparatus for the manufacture of 3D objects from composite materials, comprising:
an adjustable support platform formed by a plurality of individually adjustable support columns (116);
at least one material extrusion nozzle (148) configured to extrude a composite material of a manufactured 3D object; **characterized by**
at least one robotic arm (144) configured to operate a plurality of end-effector tools; and
wherein at least one robotic arm (144) maintains at least an extrusion nozzle (148) perpendicular to surface of the extruded 3D object's (108) surface segment,
wherein the individually adjustable support columns (116) are terminated by an object receiving surface (120) configured to accept the desired orientation in space.

11. The apparatus of claim 10, wherein the material extrusion nozzle (148) is configured to extrude the composite material comprising a multistrand filament (166) with a thixotropic matrix material surrounding the multistrand filament (166).

12. The apparatus of claim 10, wherein the object receiving surface (120) rotates 340 degrees in any direction concerning the symmetry axis (Z-axis) of the adjustable support Column (116).

13. The apparatus of claim 11, wherein the robotic arm (144) holding the composite material extrusion nozzle (148) is configured to follow the contour of the spanning in the air 3D object surface element.

14. The apparatus of claim 11, wherein at least one robotic arm (144) is configured to operate a plurality of exchangeable end-effector tools.

15. The apparatus of claim 13, wherein a control computer (152) receives the contour of the 3D object (108) surface segment spanning in the air from a CAD system.

## Patentansprüche

1. Verfahren zur Herstellung von 3D-Objekten aus Verbundmaterialien, umfassend:
Bereitstellen eines Verbundmaterials;
Bereitstellen eines Extrusionselements, das dazu konfiguriert ist, das Verbundmaterial zu extrudieren;
Bereitstellen einer Arbeitsoberfläche, umfassend eine Vielzahl von einzelnen Stützsäulen (116), die durch eine Aufnahmeoberfläche (120) abgeschlossen sind, und Extrudieren mindestens eines Oberflächensegments des 3D-Objekts (108), das sich in der Luft über mindestens einen Abschnitt einer einzelnen Arbeitsoberfläche erstreckt, **dadurch gekennzeichnet, dass**:
das Verbundmaterial ein mehrsträngiges Filament (166) mit einem thixotropem Matrixmaterial, das das mehrsträngige Filament (166) umgibt, beinhaltet; und
die Aufnahmeoberfläche, die die einzelnen Stützsäulen (116) abschließt, dazu konfiguriert ist, die räumliche Ausrichtung anzunehmen, die der Ausrichtung des Oberflächensegments des 3D-Objektes (108), das sich in der Luft erstreckt, entspricht.

2. Verfahren nach Anspruch 1, wobei eine Quelle (162) von Härtungsenergie, um ein vollständiges Härten des sich in der Luft erstreckenden Oberflächensegments des 3D-Objekts zu beschleunigen, betrieben wird.

3. Verfahren nach Anspruch 1, wobei das Sich-in-der-Luft-Erstrecken des Oberflächensegments des 3D-Objekts (108) starr genug ist und in der Luft erstreckt bleibt, ohne dass ein Dorn verwendet wird.

4. Verfahren nach Anspruch 1, wobei das Verfahren die Herstellung einer Form zum Gießen von 3D-Objekten beinhaltet.

5. Verfahren nach Anspruch 1, wobei das thixotrope Material eine sofortige Härtung des mehrsträngigen Filaments (166) unterstützt.

6. Verfahren nach Anspruch 1, wobei das mehrsträngige Filament (166) ein verstärktes Filament (406) ist, das einen mehrsträngigen Kern (408), ein Matrixmaterial (412), das den mehrsträngigen Kern (408) umgibt, und eine zusätzliche Beschichtung (416), die eine schnelle Erstarrung des verstärkten Filaments (406) unterstützt, umfasst.

7. Verfahren nach Anspruch 6, wobei der mehrsträngige Kern (408) aus einem Materal besteht, das aus Glasfaser-, Kohlenstofffaser-, Aramidfaser- und Kevlar-Strängen ausgewählt ist.

8. Verfahren nach Anspruch 6 oder Anspruch 7, wobei das Matrixmaterial (412) aus einem Material besteht, das aus einem Zweikomponentenepoxid, einem schnell härtenden Epoxid, einem Polyesterharz und einem Vinylester ausgewählt ist.

9. Verfahren nach Anspruch 1, umfassend:
Extrudieren des mehrsträngigen Filaments (166) in einer Form eines flachen Streifens; und
Aufbringen mehrerer Beschichtungen aus unterschiedlichem Material auf die Seiten des flachen Streifens.

10. Vorrichtung zur Herstellung von 3D-Objekten aus Verbundmaterialien, umfassend:
eine einstellbare Stützplattform, die durch eine Vielzahl von einzeln einstellbaren Stützsäulen (116) gebildet ist;
mindestens eine Materialextrusionsdüse (148), die dazu konfiguriert ist, ein Verbundmaterial eines hergestellten 3D-Objekts zu extrudieren; **gekennzeichnet durch**
mindestens einen Roboterarm (144), der dazu konfiguriert ist, eine Vielzahl von Endeffektor-Werkzeugen zu betreiben; und
wobei mindestens ein Roboterarm (144) mindestens eine Extrusionsdüse (148) senkrecht zur Oberfläche des Oberflächensegments des extrudierten 3D-Objekts (108) hält,
wobei die einzeln einstellbaren Stützsäulen (116) durch eine Objektaufnahmeoberfläche (120) abgeschlossen werden, die dazu konfiguriert ist, die gewünschte räumliche Ausrichtung anzunehmen.

11. Vorrichtung nach Anspruch 10, wobei die Materialextrusionsdüse (148) dazu konfiguriert ist, das Verbundmaterial, das ein mehrsträngiges Filament (166) umfasst, mit einem thixotropen Matrixmaterial, das das mehrsträngige Filament (166) umgibt, zu extrudieren.

12. Vorrichtung nach Anspruch 10, wobei sich die Objektaufnahmeoberfläche (120) um 340 Grad in einer beliebigen Richtung bezüglich der Symmetrieachse (Z-Achse) der einstellbaren Stützsäule (116) dreht.

13. Vorrichtung nach Anspruch 11, wobei der Roboterarm (144), der die Verbundmaterial-Extrusionsdüse (148) hält, dazu konfiguriert ist, der Kontur des sich in der Luft erstreckenden Oberflächenelements des 3D-Objekts zu folgen.

14. Vorrichtung nach Anspruch 11, wobei mindestens ein Roboterarm (144) dazu konfiguriert ist, eine Vielzahl von austauschbaren Endeffektor-Werkzeugen zu betreiben.

15. Vorrichtung nach Anspruch 13, wobei ein Steuercomputer (152) die Kontur des sich in der Luft erstreckenden Oberflächensegments des 3D-Objekts (108) von einem CAD-System empfängt.

## Revendications

1. Procédé de fabrication d'objets 3D à partir de matériaux composites, comprenant :
la fourniture d'un matériau composite ;
la fourniture d'un élément d'extrusion configuré pour extruder le matériau composite ;
la fourniture d'une surface de travail comprenant une pluralité de colonnes de support discrètes (116) terminées par une surface de réception (120) et l'extrusion d'au moins un segment de surface d'objet 3D (108) s'étendant en porte-à-faux dans l'air à travers au moins une partie d'une surface de travail discrète, **caractérisé en ce que** :
le matériau composite comprenne un filament multibrin (166) avec un matériau de matrice thixotrope entourant le filament multibrin (166) ; et
la surface de réception terminant les colonnes de support discrètes (116) soit configurée pour adopter l'orientation dans l'espace correspondant à l'orientation du segment de surface d'objet 3D (108) s'étendant en porte-à-faux dans l'air.

2. Procédé selon la revendication 1, dans lequel une source (162) d'énergie de durcissement est actionnée pour accélérer le durcissement complet du segment de surface d'objet 3D s'étendant en porte-à-faux dans l'air.

3. Procédé selon la revendication 1, dans lequel le segment de surface d'objet 3D (108) s'étendant en porte-à-faux dans l'air est suffisamment rigide et reste suspendu dans l'air sans l'utilisation d'un mandrin.

4. Procédé selon la revendication 1, dans lequel le procédé comprend la fabrication d'un moule destiné à la coulée d'objets 3D.

5. Procédé selon la revendication 1, dans lequel le matériau thixotrope favorise le durcissement instantané du filament multibrin (166).

6. Procédé selon la revendication 1, dans lequel le filament multibrin (166) est un filament renforcé (406) comprenant une âme multibrin (408), un matériau de matrice (412) entourant l'âme multibrin (408) et un revêtement supplémentaire (416) favorisant une solidification rapide du filament renforcé (406).

7. Procédé selon la revendication 6, dans lequel l'âme multibrin (408) est constituée d'un matériau choisi parmi la fibre de verre, la fibre de carbone, la fibre d'aramide et des brins de Kevlar.

8. Procédé selon la revendication 6 ou la revendication 7, dans lequel le matériau de matrice (412) est constitué d'un matériau choisi parmi une résine époxy à deux composants, une résine époxy à durcissement rapide, une résine polyester et un ester vinylique.

9. Procédé selon la revendication 1, comprenant :
l'extrusion du filament multibrin (166) sous la forme d'une bande plate ; et
l'application de multiples revêtements de matériaux différents sur les côtés de la bande plate.

10. Appareil pour la fabrication d'objets 3D à partir de matériaux composites, comprenant :
une plate-forme de support réglable formée par une pluralité de colonnes de support (116) réglables individuellement ;
au moins une buse d'extrusion de matériau (148) configurée pour extruder un matériau composite d'un objet 3D fabriqué ; **caractérisé en ce qu'**il comprenne :
au moins un bras robotique (144) configuré pour manipuler une pluralité d'effecteurs terminaux ; et
dans lequel ledit au moins un bras robotique (144) maintient au moins une buse d'extrusion (148) perpendiculairement à la surface du segment de surface de l'objet 3D extrudé (108),
dans lequel les colonnes de support (116) réglables individuellement sont terminées par une surface de réception d'objet (120) configurée pour adopter l'orientation souhaitée dans l'espace.

11. Appareil selon la revendication 10, dans lequel la buse d'extrusion de matériau (148) est configurée pour extruder le matériau composite comprenant un filament multibrin (166) avec un matériau de matrice thixotrope entourant le filament multibrin (166).

12. Appareil selon la revendication 10, dans lequel la surface de réception d'objet (120) peut tourner de 340 degrés dans toute direction autour de l'axe de symétrie (axe Z) de la colonne de support réglable (116).

13. Appareil selon la revendication 11, dans lequel le bras robotique (144) maintenant la buse d'extrusion de matériau composite (148) est configuré pour suivre le contour du segment de surface d'objet 3D s'étendant en porte-à-faux dans l'air.

14. Appareil selon la revendication 11, dans lequel au moins un bras robotique (144) est configuré pour manipuler une pluralité d'effecteurs terminaux interchangeables.

15. Appareil selon la revendication 13, dans lequel un ordinateur de commande (152) reçoit le contour du segment de surface d'objet 3D (108) s'étendant en porte-à-faux dans l'air à partir d'un système de CAO.
